# EUROPÄISCHE PATENTSCHRIFT

(11) **EP 0 521 229 B1**
(45) Veröffentlichungstag und Bekanntmachung des Hinweises auf die Patenterteilung: **14.08.1996**
(21) Anmeldenummer: 91830451.0
(22) Anmeldetag: 22.10.1991
(51) Int. Cl.: G09F 11/29, H05B 41/392, H05B 41/29

(54) **Vorrichtung, insbesondere zum Präsentieren von rückseitig beleuchtbaren Bildern, insbesondere Werbebildern**
Device to display images illuminated from behind, particularly advertising images
Dispositif pour l'affichage d'images illuminées par l'arrière, en particulier images publicitaires

(43) Veröffentlichungstag der Anmeldung: 07.01.1993
(73) Patentinhaber: MECKIND srl, I-20040 Busnago (MI) (IT)
(72) Erfinder: Arlati, Carlo Marino P.I., IT-20040 Busnago (Milano) (IT)
(74) Vertreter: Roth, Ronald, Dipl.-Ing.

(56) Entgegenhaltungen:
- EP-A- 0 399 428
- WO-A-90/01248
- FR-A- 2 394 861
- FR-A- 2 589 272
- US-A- 4 920 302
- US-A- 4 995 183
- US-A- 5 003 717

## Beschreibung

Die Erfindung betrifft eine Vorrichtung zum Präsentieren von rückseitig beleuchtbaren Bildern, insbesondere Werbebildern, die von einem folienartigen Träger getragen sind.

Bekannte Vorrichtungen dieser Art dienen als Werbekästen und werden beispielsweise in Omnibussen an der Rückseite der Fahrer-Trennwand derart montiert, daß das Bildfenster den Fahrgästen zugewandt ist und durch diese während der Fahrt und eventueller Aufenthalte betrachtet werden können. Durch die rückseitige Beleuchtung der transparenten Werbeplakate werden diese mit hoher Farbintensität und gutem Kontrast dargeboten. Ein im Bildfeld befindliches Bild bleibt dort für einen bestimmten Zeitraum von beispielsweise fünf bis 15 Sekunden fest stehen und wird dann automatisch aus dem Bildfenster transportiert, wobei zugleich ein nachfolgendes Bildfeld in das Bildfenster eingefahren wird. Dieser Vorgang wiederholt sich intermittierend so lange, bis alle Bildfelder intermittierend im Bildfenster dargeboten wurden. Danach findet eine Umsteuerung der Drehrichtung des Antriebsmotors für die Auf- und Abwickelwalzen statt, so daß die Bilder nun intermittierend in Gegenrichtung gefördert und jeweils im Bildfenster vorübergehend angehalten werden. Durch diese intermittierende Bewegung läßt sich einerseits erhöhter Aufmerksamkeitswert erzielen und andererseits die Vorrichtung zur Präsentation unterschiedlicher Werbebilder bzw. -plakate ausnutzen. Die Auf- und Abwickelwalzen sind parallel zum unteren und oberen Rand des Bildfensters angeordnet, so daß die Bilder in Vertikalrichtung transportiert werden. Zum Antrieb des Bildträgers und der Walzen wird ein verhältnismäßig starker Induktionsmotor eingesetzt.

Aus der US-A-4,995,183 ist eine Bildpräsentationsvorrichtung gemäß dem Oberbegriff des Patentanspruchs 1 bekannt, bei der eine Bildfolie zwischen zwei Walzen derart hin- und hertransportiert wird, daß jeweils gewünschte Bildfelder dem Betrachter präsentiert werden. Die Walzen stehen parallel zu den vertikalen Bildfeldrändern und werden mittels eines Motors angetrieben.

Aus der FR-A-2 589 272 ist eine ähnliche Bildpräsentationsvorrichtung bekannt, bei der zusätzlich zu den horizontal transportierbaren Bildfeldern eine vertikal bewegliche Abdeckung vorgesehen ist. Der Antrieb der Bildfolienwalzen erfolgt auch hier motorisch.

Der Erfindung liegt die Aufgabe zugrunde, eine Vorrichtung zu schaffen, die sich durch gute Gebrauchstauglichkeit auszeichnet. Dies wird mit den in den Ansprüchen angegebenen Merkmalen erreicht.

Gemäß Patentanspruch 1 ist der Antriebsmotor mit einer Rückkopplungsschaltung versehen, die die an den Antriebsmotor angelegte Spannung bei ansteigendem Motorstrom erhöht. Hierdurch läßt sich der interne Motorwiderstand gewissermaßen durch einen in Reihe geschalteten negativen Widerstand kompensieren, so daß eine Drehzahl- bzw. Drehkraftkompensation erreicht wird. Unterschiedliche Drehmomentanforderungen können somit problemlos bewältigt werden. Hierbei kann die Drehzahl des Antriebsmotors auf einen im wesentlichen konstanten Wert geregelt werden, und zwar entweder durch die Rückkopplungsschaltung selbst oder durch eine zusätzliche Drehzahlregelschaltung. Dies bringt den deutlichen Vorteil, daß der Motor verhältnismäßig klein und kompakt ausgebildet werden kann und dennoch zuverlässig im wesentlichen konstante Transportgeschwindigkeit beim Weitertransport der Bilder gewährleistet. Der Betrachter erhält somit einen sehr gleichmäßigen, harmonischen Bildbewegungseindruck. Zugleich sind die mechanischen Beanspruchungen der Folie beim Transportvorgang erheblich vergleichmäßigt. Durch die hierdurch ermöglichte Verwendung eines verhältnismäßig kleinen Motors wird das Gesamtgewicht des Bildpräsentationsgeräts deutlich gesenkt, was dessen Handhabbarkeit und auch Installationssicherheit erheblich verbessert. Zudem läßt sich der Motor aufgrund seiner geringen Masse sowie der geringen Masse der anzutreibenden Komponenten sehr rasch auf die Solldrehzahl beschleunigen und von dieser auf Stillstand abbremsen, so daß die Motorsteuerung sehr präzise folgt und demgemäß auch die Anhalteposition der Bilder im wesentlichen exakt dem angestrebten Sollwert entspricht.

Die Anordnung der Walzen parallel zu den vertikalen Seitenrändern des Bildfensters bringt kompaktere und auch gleichmäßiger steuerbare Bauform, da die Bildhöhe regelmäßig kleiner als die Bildbreite ist und somit die Länge der Walzen nur etwas größer sein muß als die entsprechend der Bildhöhe relativ schmal wählbare Breite des folienartigen Trägers. Aufgrund der verringerten Walzenlänge verringert sich zugleich auch deren Gewicht, so daß die benötigte Antriebsenergie verringert ist. Zudem wird der die Bilder tragende folienartige Träger nun sowohl beim Vor- als auch beim Rücklauf stets horizontal bewegt, so daß die Schwerkraft keine ungleichmäßigen Einflüsse auf die benötigte Antriebsenergie ausüben kann. Demgegenüber sind bei vertikaler Förderung die aufzubringenden Kräfte beim Vor- und Rücklauf unterschiedlich, was Transport- und Steuerungsungleichmäßigkeiten hervorrufen kann. Auch wird die horizontale Bildförderung visuell harmonischer empfunden als vertikaler Bildtransport. Neben größerer Kompaktheit wird ferner zugleich auch eine entsprechende Gewichtseinsparung erzielt.

Die Kopplung des Antriebsmotors über einen Riemen, der in bevorzugter Ausgestaltung als Zahnriemen ausgebildet ist, mit den Walzen erlaubt eine äußerst einfache Kraftübertragung, ohne Notwendigkeit eines festen Gestänges zwischen den Walzen und dem Antriebsmotor bzw. einem gegebenenfalls zwischengeschalteten Getriebe, wobei auch größere Abstände problemlos überbrückt werden können. Der Aufbau ist einfach, leicht und wartungsfreundlich bei dennoch effektiver Kraftübertragung. Die eine Walze kann hierbei direkt über den Riemen und ein gegebenenfalls zwischengeschaltetes Getriebe mit dem Antriebsmotor gekoppelt sein, so daß diese direkt durch den Antriebsmotor angetrieben wird. Auch die andere Walze wird über den Riemen angetrieben, ist jedoch vorzugsweise mit einer Federkupplung versehen, durch die sie unabhängig von der Anzahl der Umdrehungen und der jeweiligen Drehlage mit im wesentlichen konstanter Vorspannung beaufschlagt wird. Hierdurch wird in einfacher und gewichtssparender Weise erreicht, daß die notwendigen geringfügigen Drehzahlunterschiede der beiden Walzen, die durch unterschiedlichen Wickeldurchmesser des jeweils darauf aufgewickelten folienartigen Trägers bedingt sind, problemlos ausgeglichen werden können und dennoch die Folie mit im wesentlichen gleicher Vorspannung an den Walzen anliegt, um die Folie und damit das Bild straff zu spannen, ohne diese aber übermäßig hoher Zugspannung auszusetzen. Die Federkupplung kann insbesondere eine im Inneren der Walze angeordnete Spiralfeder konstanter Federkraft mit einer Vielzahl von Windungen sein, bei der bei einer jeweiligen Umdrehung die jeweils im Übergangsbereich zwischen den Federwicklungen auf dem Walzenkern und den Federwicklungen am Spiralfederumfang vorhandene Federwindung von innen nach außen oder umgekehrt umschnappt, so daß die von der Feder aufgebrachte Vorspannung im wesentlichen stets der Kraft einer Spiralfederwindung entspricht.

Vorzugsweise sind auf der Trägerfolie, oder auch direkt auf den Bildern, Markierungen angebracht, die durch eine Detektoranordnung berührungsfrei abtastbar sind. Diese Markierungen können z. B. magnetische Codierungen sein, sind bevorzugt aber als optische Markierungen ausgebildet, die fotoelektrisch abgetastet werden können. Solche optischen Markierungen haben den Vorteil sehr einfacher Anbringbarkeit und können auch visuell problemlos hinsichtlich korrekter Position, Beschädigungsfreiheit und dergleichen überprüft werden. Hierbei ist vorteilhafterweise für jedes Bild bzw. Bildfeld des Trägers eine Markierung vorhanden, bei deren Erfassung die Detektoranordnung ein Signal zum sofortigen Anhalten des Antriebsmotors und damit zum sofortigen Stillsetzen des Bildes im Bildfenster erzeugt. Aufgrund des raschen Ansprechverhaltens des Motors wird das Bild sofort in der gewünschten Sollage angehalten. Die Markierung kann direkt auf der Mittellinie des Bildes bzw. Bildfeldes angebracht sein, wobei dann auch die zugehörige Lichtschranke auf der Bildfenster-Mittellinie sitzt. Um die randseitigen Bilder bzw. Bildfelder der Trägerfolie erkennen zu können, sind dort vorzugsweise zusätzliche Markierungen vorhanden, die durch weitere Detektoren, insbesondere in Form von Lichtschranken, erkannt werden. Bei Erfassung dieser randseitigen Markierungen kann die Drehrichtung des Antriebsmotors vor dem nächsten Bildtransport umgekehrt werden, so daß die Folie und damit die Bilder anschließend in Gegenrichtung transportiert werden. Damit kann die gesamte Folie mit den darauf befindlichen Bildern beliebig oft hin- und hertransportiert werden, ohne daß ein benutzerseitiger Eingriff erforderlich ist.

Die zu präsentierenden Bilder können direkt auf der Trägerfolie aufgebracht oder aufgedruckt sein. In bevorzugter Ausgestaltung weist der folienartige Träger aber zwei Lagen auf, die derart miteinander verbunden sind, daß für jedes Bildfeld eine Tasche gebildet ist, die seitlich und am unteren Rand geschlossen ist, während sie nach oben offen ist. Ein gewünschtes Reklamebild kann somit von oben in die hierdurch gebildeten Folientaschen eingeschoben werden. Dies hat den Vorteil, daß die zu präsentierenden Bilder problemlos erneuert oder durch andere Bilder ersetzt werden können. Die Folientaschen sind hierbei vorzugsweise zumindest gleich groß wie das Bildfenster oder etwas größer als dieses. Um einen Betrieb des Geräts auch dann zu ermöglichen, wenn nicht alle Bildfelder (Folientaschen) des Trägers mit Bildern belegt sind, und zugleich die Präsentation von Leerbildfeldern zu vermeiden, ist vorzugsweise ein voreinstellbarer Zähler vorhanden, der die Anzahl von transportierten Bildern zählt, vorzugsweise jeweils beginnend vom ersten Bildfeld der Bildfeld- bzw. Bildreihe auf dem Träger, und bei Erreichen der voreingestellten Zählstands ein Signal zur Umkehr der Drehrichtung erzeugt. Durch Einstellung des Zählers auf die Anzahl von mit Bildern belegten Bildfeldern oder Folientaschen wird somit, ausgehend vom ersten Bild, jedes Bild dem Betrachter intermittierend dargeboten und bei Erreichen des letzten mit einem Bild versehenen Bilds und dessen Stillstandsdarbietung die Transportrichtung des Folientransports automatisch wieder umgedreht, d.h. die Bilder in Gegenrichtung dargeboten. Die unbelegten Bildfelder des folienartigen Trägers gelangen somit nicht vor das Bildfenster. In besonders einfacher Weise wird der Zähler bei Erfassung des ersten Bilds auf dem Träger wieder zurückgesetzt. Es ist somit kein aufwendiger Zweirichtungszähler erforderlich, vielmehr kann der bei Umschaltung der Transportrichtung auf Rücklauf erreichte Zählstand des Zählers beibehalten bleiben, bis er bei Erreichen des anfänglichen Bilds wieder gelöscht wird. Dies vereinfacht den Aufbau und verringert den schaltungstechnischen Aufwand. Die Spannungsversorgung der Vorrichtung erfolgt vorzugsweise extern, beispielweise durch die Fahrzeugbatterie des mit der erfindungsgemäßen Vorrichtung ausgestatteten Busses. Alternativ oder vorzugsweise zusätzlich kann aber auch eine interne Spannungsquelle vorhanden sein, um die Spannungsversorgung zumindest kurzzeitig aufrechtzuerhalten. Dies hat den Vorteil, daß selbst bei Abschalten der externen Spannungsversorgung (beispielsweise durch Abschalten des Kraftfahrzeug-Zündschlosses) während des laufenden Bildtransports das neue Bild noch mittig bis ins Bildfenster verfahren wird - unter Überwachung durch die Detektoreinrichtung -. Hierdurch ist das optische Aussehen der Bilddarbietung verbessert. Zudem ist die Bildfolie gleichen Umgebungseinflüssen, beispielsweise Helligkeitseinflüssen ausgesetzt, so daß evtl. Alterungseffekte oder Farbveränderungen gleichmäßig über das gesamte präsentierte Bild wirksam sind. Ferner kann die interne Spannungsversorgung bei kurzfristigen Ausfällen der externen Spannungsversorgung diese Spannungslücken überbrücken, so daß das Gerät störungsfrei arbeitet. Solche externen Spannungsausfälle können beispielsweise bei Elektrobussen bei Fahrbahn- und Oberleitungswechsel auftreten. Bildtransportstörungen und auch ein Bildflackern werden hierdurch ausgeschaltet. Zudem sind nun auch bei abgeschalteter externer Spannungsversorgung Wartungsarbeiten im Gehäuseinneren und sofortige Funktionstests durchführbar. Die interne Spannungsquelle kann als Batterie ausgestaltet sein und ist vorzugsweise ein durch die externe Spannungsversorgung wiederaufladbarer Akkumulator. Zur manuellen Steuerung des Bildtransports bei ausgeschalteter oder auch eingeschalteter externer Spannungsversorgung können am oder - zur Vermeidung von Fremdbetätigungen - vorzugsweise im Gehäuse Schalter vorgesehen sein, über die Rechts- oder Linkslauf der Folie samt Bilder befehlbar ist. Der die Wartung durchführende Monteur oder dergleichen muß somit nicht die Folienwalzen von Hand durchdrehen, um die Bildfelder zu transportieren, sondern kann dies automatisch durchführen. Zugleich kann er hierbei auch die korrekte Funktionsweise der Lichtschranken usw. überprüfen.

Das Bildfenster kann mit einer lichtdurchlässigen Platte abgedeckt sein. Vorzugsweise sind aber auf beiden Seiten des folienartigen Trägers lichtdurchlässige Platten angeordnet. Die dem Betrachter zugewendete Platte ist vorzugsweise volltransparent, während die rückseitige Platte ebenfalls volltransparent sein kann oder vorzugsweise semitransparent ist und aus hellem, insbesondere weißlichem Material besteht. Die rückseitige Platte hat dann Doppelfunktion, nämlich die Stabilität der Vorrichtung gegenüber Beschädigungen zumindest im Bildfensterbereich zu erhöhen, da durch die parallel zueinander angeordneten Platten erhöhte Schutzfunktion gegenüber Beschädigungen des Vorrichtungsinneren erreicht wird. Die weitere Funktion besteht darin, als Diffusor zu wirken, so daß der Hintergrund des dargebotenen Bilds im wesentlich gleichmäßige Helligkeit besitzt, d.h. die Lampenstruktur sich kaum in der Helligkeitsverteilung abzeichnet. Somit läßt sich gleichmäßige Hintergrundbeleuchtung des präsentierten Bilds erreichen, so daß dieses mit hohem Kontrast und großer Farbintensität vom Betrachter wahrnehmbar ist.

Bevorzugt wird eine Lampensteuerschaltung eingesetzt, bei der ein Spannungsgenerator zumindest anfänglich eine oberhalb von 250 V liegende Spannung an die Leuchtröhre (Gasentladungsröhre) anlegt. Die Leuchtröhre ist insbesondere als Niederdruck-Leuchtstofflampe, vorzugsweise als Neon-Röhre, ausgelegt. Durch die an die Leuchtröhre angelegte Spannung wird selbst bei noch kalter Leuchtstofflampe eine Ionisation des in der Leuchtröhre enthaltenen Gases erreicht, die aufgrund des die gesamte Fluoreszenzröhre durchsetzenden elektrischen Felds im gesamten Inneren der Fluoreszenzröhre erfolgt. Hierdurch wird die Gasstrecke in gewissem Ausmaß leitend. Die Amplitude der Spannung hat ausreichenden Wert, um diese Ionisation einzuleiten, und liegt zwischen 300 und ungefähr 900 V. Ein bevorzugter Wert liegt bei etwa 600 V. Durch die anfängliche Ionisation des Gases in der Leuchtröhre kann sich in dieser eine Stromstrecke bilden, so daß die Röhre zu leuchten beginnt. Hierbei ist vorzugsweise ein Energiespeicher, insbesondere in Form eines Kondensators, parallel zur Leuchtröhre geschaltet. Die während der Anfangsphase in diesem gespeicherte Energie entlädt sich bei ausreichender Leitfähigkeit des Gases in der Leuchtröhre über die Gasstrecke und bewirkt dabei eine starke Erhöhung der Stromstärke und der Temperatur. Hierbei wird das Quecksilber verdampft und die Gasentladung stabilisiert, so daß die Lampe konstant brennt. Der zur Lampenzündung erforderliche Energiebedarf ist dabei sehr gering. Auch zündet die Lampe äußerst rasch, in ca. 50 ms und brennt dann kontinuierlich. Dabei besitzt die Lampe hohe Effizienz und hohe Lebensdauer, insbesondere, wenn sie mit auf einen konstanten Pegel begrenztem Strom betrieben wird, und benötigt nur geringe Leistungsaufnahme von z. B. 20 W bei hoher Leuchtdichte. Darüber hinaus werden keine endseitigen Filamente (Glühwendeln) benötigt, um die Lampe zu zünden. Auch ein Starter kann entfallen. Selbst Leuchtstoffröhren mit durchgebrannten Filamenten können auf erfindungsgemäße Weise gezündet werden.

Die Leuchtröhre wird vorzugsweise mit verhältnismäßig hoher Frequenz zwischen ca. 10 bis 100 kHz betrieben. Ein bevorzugter Wert liegt im Bereich zwischen 40 und 60, insbesondere ca. 50 kHz. Die hohe Frequenz bringt auch sicherheitstechnische Vorteile, da trotz der verhältnismäßig hohen Spannung selbst bei Berührungen der Lampenkontakte oder anderer Schaltungskomponenten keine Lebensgefahr besteht. Aufgrund der hohen Frequenz tritt nämlich der Skin-Effekt in Erscheinung, so daß der Strom nur an der Oberfläche fließt, nicht aber den Herzschlag beeinflussen kann. Durch den Einsatz eines Konverters kann eine eingangsseitige Niedergleichspannung, wie sie beispielsweise durch eine Kraftfahrzeugbatterie geliefert wird, in die höhere Lampenspeisespannung transformiert werden. Dieser Konverter kann zum großen Teil aus integrierten Komponenten gebildet werden und somit kompakt und leichtgewichtig aufgebaut sein. Der Konverter kann einen Transformator umfassen, mit dessen Sekundärwicklung die Leuchtröhre unter Zwischenschaltung einer Diode verbunden ist. Bei noch nicht gezündeter Leuchtröhre fließt über die Diode Ladestrom zum Kondensator, wobei eine Entladung in Gegenrichtung gesperrt ist. Die periodische Stromabschaltung bei Erreichen eines vorgegebenen Strom-Schwellwerts bringt den Vorteil, daß zu hohe Lampenströme vermieden werden und somit die Lampen-Lebensdauer hoch ist. Zudem wird hierdurch die Lampenleistung konstant gehalten, selbst bei variierender Speisespannung. Bei Erhöhung der Spannung wächst der Strom nämlich rascher an, so daß die Stromschwelle rascher erreicht und dann der Strom abgeschaltet wird. Die Leistungsaufnahme der Lampe wird hierdurch unabhängig von der Größe der Versorgungsspannung, so daß diese zwischen z. B. 16 und 32 V (Omnibus-Batterie) schwanken kann, ohne daß sich die Funktionsfähigkeit oder die Lampenhelligkeit verändert. Durch die periodische Schaltung des Sperrglieds wird die Betriebsfrequenz bestimmt, so daß diese in einfacher Weise festlegbar ist. Bei Einsatz eines elektronischen Schalters kann die Stromabschaltung und -freigabe äußerst rasch und im wesentlichen verlustfrei realisiert werden. Bei zusätzlicher Überwachung der am Sperrglied anliegenden mittleren Spannung kann über eine Rückkopplungsschaltung das Auftreten von Überspannungen vermieden werden, die zur Zerstörung des elektronischen Schalters führen könnten. Bei der Rückkopplung kann beispielsweise der Strom-Schwellwert mit ansteigender Spannung verringert werden, wodurch sich der Strommittelwert entsprechend verringert. Die erfindungsgemäße Lampensteuerschaltung kann zur Ansteuerung aller geeigneten Fluoreszenzröhren eingesetzt werden, auch unabhängig von deren Verwendung in einer Bildpräsentationsvorrichtung.

Die Erfindung wird nachstehend anhand von Ausführungsbeispielen unter Bezugnahme auf die Zeichnungen näher erläutert. Es zeigen:
- Figur 1: eine geschnittene Seitenansicht auf ein Ausführungsbeispiel der Vorrichtung zum Präsentieren von Bildern,
- Figur 2: eine Horizontalschnittansicht der Vorrichtung gemäß Figur 1,
- Figur 3: einen Vertikal-Querschnitt durch die Vorrichtung,
- Figur 4: eine verkleinerte Darstellung des die Bilder tragenden folienartigen Trägers samt Markierungen und zugehörigen Lichtschranken,
- Figur 5: eine schematische Steuerschaltung für die Steuerung des Antriebsmotors und
- Figur 6: ein Ausführungsbeispiel einer Lampensteuerschaltung.

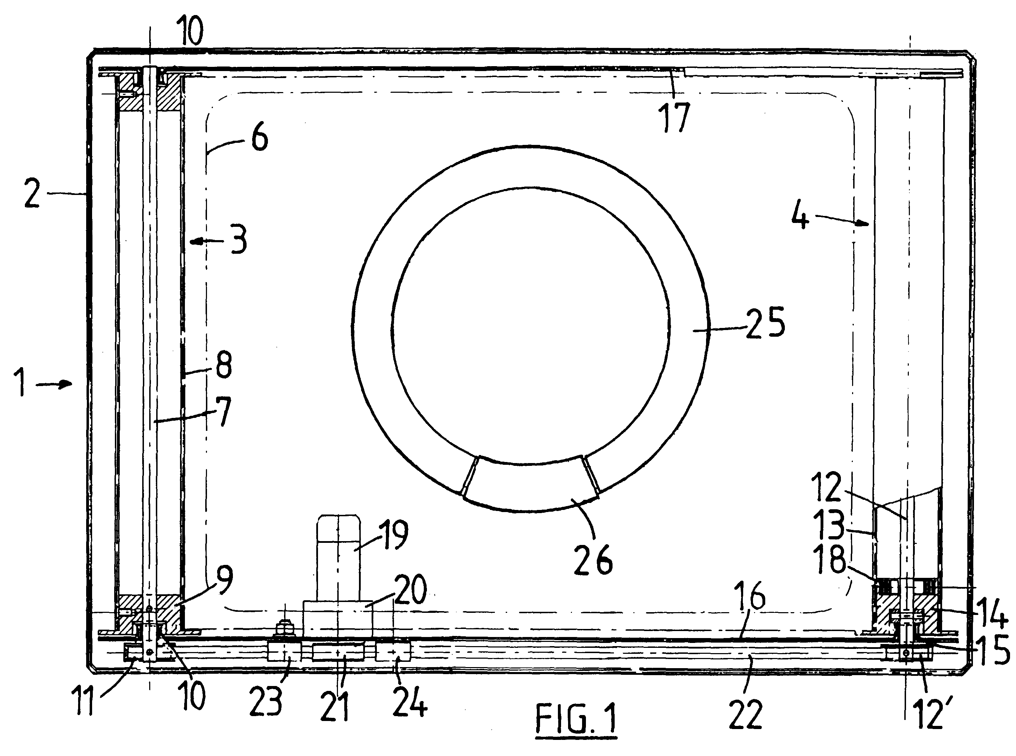

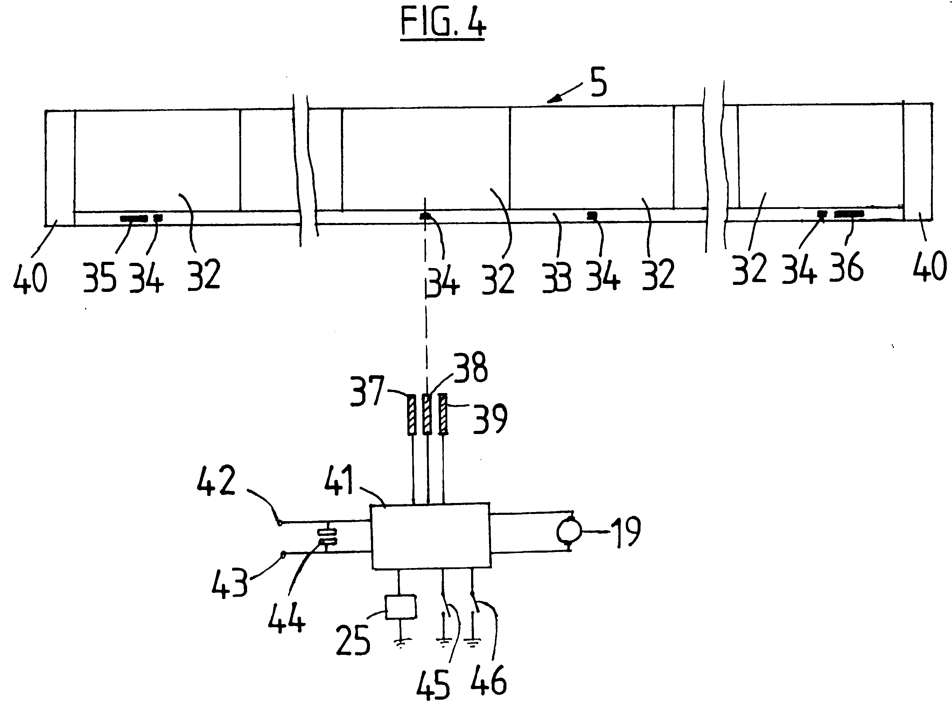

Das in den Figuren 1 bis 3 gezeigte Ausführungsbeispiel der Vorrichtung 1 zum Präsentieren von Bildern, insbesondere Werbebildern, umfaßt ein Gehäuse 2, in dem zwei Walzen 3 und 4 drehbar angeordnet sind. Die Walzen 3 und 4 dienen zum Auf- und Abwickeln eines in Figur 4 näher gezeigten, langgestreckten folienartigen Trägers 5 mit mehreren Bildfeldern, die einzelne Bilder in Form von im Durchlichtverfahren betrachtbaren Bildfolien, Drucken oder dergleichen tragen. Die Bilder werden jeweils stationär in einem in Figur 1 strichpunktiert dargestellten Bildfenster 6 für ein bestimmtes Zeitintervall von ca. 5 bis 15 Sekunden dargeboten und dann automatisch aus dem Bildfenster 6 transportiert, während zugleich das nächste Bild in das Bildfenster 6 eingefahren wird. Die Walzen 3, 4 liegen parallel zu den vertikalen Schmalseiten des Bildfensters 6, so daß die Trägerfolie 5 in Horizontalrichtung transportiert wird. Die Walzen 3, 4 haben eine Länge, die nur geringfügig größer als die Breite der Trägerfolie 5 und damit relativ kurz ist.

Die Walze 3 besteht aus einer Innenwelle 7 und einem konzentrisch hierzu verlaufenden Außenrohr 8, auf dem die Trägerfolie 5 auf- und abgewickelt wird. Die Innenwelle 7 und das Außenrohr 8 sind über stirnseitige Stopfen 9 und zugehörige Schrauben-/Stiftverbindungen drehfest miteinander verbunden. Die Innenwelle 7 ist in Rollenlagern 10 drehbar gelagert und trägt an dem nach unten vorstehenden Ende drehfest ein Zahnrad 11.

Die Walze 4 weist ähnlich wie die Walze 3 eine Innenwelle 12 und konzentrisch hierzu ein Außenrohr 13 zum Auf- und Abwickeln der Trägerfolie 5 auf. Wie bei der Walze 3 sind in das Außenrohr 13 endseitig Stopfen 14 mit auskragendem Rand eigeführt, die durch die Mittelwelle 12 (bzw. 7) durchsetzt werden. In Figur 1 ist nur einer der beiden Stopfen 14 gezeigt. Die Mittelwelle 12 ist, wie die Mittelwelle 7, in Rollenlagern 15 gelagert, deren Innen- oder Außenkäfig fest in einer Boden- bzw. Deckplatte 16 bzw. 17 gehalten ist.

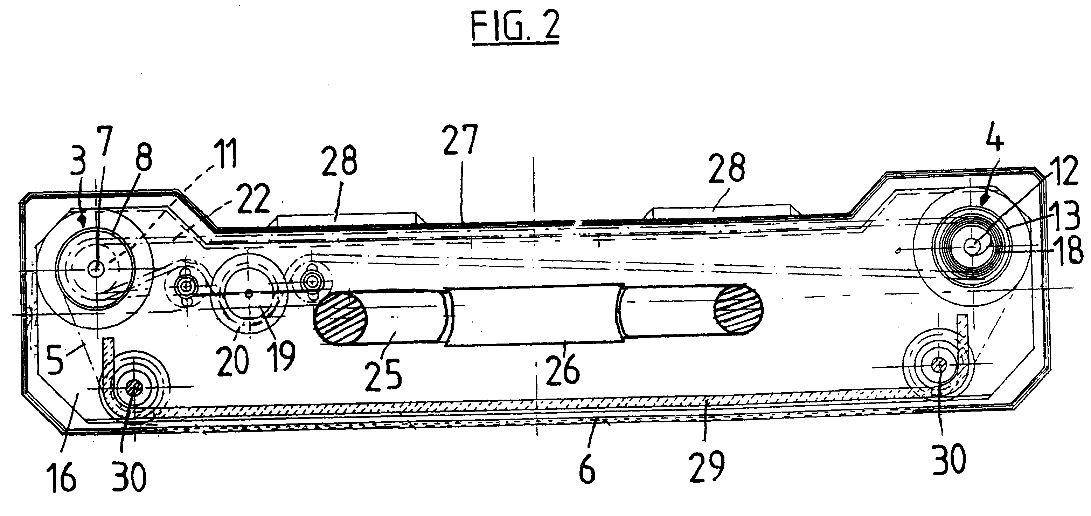

Die Innenwelle 12 und das Außenrohr 13 sind über eine Federkupplung 18 in Form einer Spiralfeder miteinander gekoppelt, um Abweichungen der Drehzahl des Außenrohrs 13 von der der Innenwelle 12 zu ermöglichen. Die Federkupplung 18 ist so ausgelegt, daß sie, zumindest oberhalb eines anfänglichen vollen Umdrehungswinkels, konstante Federkraft erzeugt, so daß das Außenrohr 13 unabhängig von der jeweiligen Drehlage der Innenwelle 12 stets mit konstanter Federvorspannung beaufschlagt ist. Die Orientierung der Federvorspannung ist derart, daß die Außenhülse 13 stets in Richtung einer (versuchten) Aufwicklung des folienartigen Trägers 5 und damit der hiervon getragenen Bilder vorgespannt ist. Hierdurch wird das jeweils im Bildfenster 6 präsentierte Bild straffgespannt und sowohl bei der Auf- als auch bei der Abwicklung eine glatte im wesentlichen faltenfreie Auflage der Folienbahnen auf den Walzen 3, 4 sichergestellt. Die Federkupplung 18 ermöglicht zudem den Drehzahlausgleich zur Kompensation der durch unterschiedliche Anzahl von Folienlagen auf den - gleichen Durchmesser besitzenden - Walzen 3, 4 hervorgerufenen Drehzahlunterschiede. Die Spiralfeder 18 ist, wie aus Figur 2 ersichtlich, mit ihrem inneren Ende mit der Innenwelle 12 verbunden und liegt mit ihren äußeren Windungen an den inneren Umfangswänden einer entsprechenden Ausnehmung in dem mit dem Außenrohr bzw. der Außenhülse 13 verbundenen Stopfen 14 an. Nach einer anfänglichen ersten Relativumdrehung zwischen Innenwelle 12 und Außenhülse 13, während der die Federkraft im wesentlichen linear zunimmt, springt bei weiteren nachfolgenden Relativumdrehungen zwischen Innenwelle und Außenhülse 13 jeweils eine der Spiralfederwindungen von außen nach innen oder umgekehrt um, so daß sich die Federkraft insgesamt nicht erhöht, sondern unabhängig von der Anzahl der Umdrehungen im wesentlichen konstant bleibt.

Die Innenwelle 12 steht nach unten durch das Rollenlager 15 vor und trägt am vorspringenden Abschnitt ein Zahnrad 12'. Zum Antrieb der Walzen 3, 4 ist ein Motor 19 mit angeflanschtem Getriebe 20 vorgesehen, dessen Achsrichtung parallel zu der der Walzen 3, 4 verläuft. Ein Abtriebszahnrad 21 des Motors 19 und Getriebes 20 ist über einen Zahnriemen 22 mit den Zahnrädern 11, 12' verbunden, so daß diese und damit die Walzen 3, 4 bei Drehung des Motors 19 gleichsinnig gedreht werden. Zur Vergrößerung des Umschlingungswinkels des Zahnriemens 22 um das Abtriebszahnrad 21 sowie zur Einstellung der Zahnriemen-Vorspannung sind benachbart zum Abtriebszahnrad 21 Umlenkrollen 23, 24 vorgesehen, die glatte Außenfläche besitzen und an der Rückseite des Zahnriemens 22 anliegen.

Wie aus den Figuren 1 und 2 ersichtlich ist, ist der Motor 19 mit zugehörigen Komponenten näher bei der Walze 3 als bei der Walze 4 angeordnet. Diese asymmetrische Anordnung hat den Vorteil, daß eine zur rückseitigen Beleuchtung des Bildfensters 6 und der darin präsentierten Bilder dienende ringförmige Gasentladungsröhre 25 symmetrisch zur Bildfenstermitte angeordnet werden kann, ohne daß Kollisionsprobleme mit dem Motor 19 auftreten. Statt der ringförmigen Röhre 25 können aber auch eine oder zwei stabförmige Gasentladungsröhren in Horizontalrichtung angeordnet werden. In diesem Fall kann der Motor 19 auch symmetrisch in der Mitte des Bildpräsentationsgeräts sitzen. Um ein Rutschen des Zahnriemens 22 im Bereich des Zahnrads 12' bei der dargestellten Motoranordnung zu vermeiden, können mit geringem Abstand zum Zahnrad 12' zwei weitere Umlenkrollen vorhanden sein, über die der Zahnriemen 22 in Form eines S geführt ist und von der oberen Umlenkrolle tangential schräg nach unten zum Zahnrad 12' läuft.

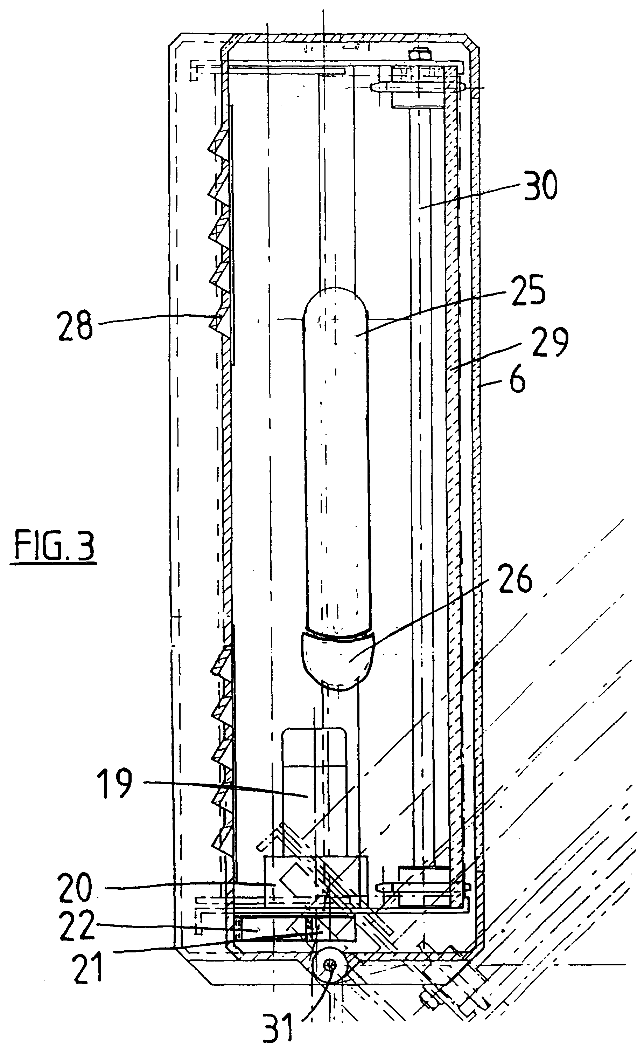

Die Gasentladungsröhre (Leuchtröhre) 25 ist, wie in den Figuren 1 und 3 gezeigt, in einer Halterung 26 mechanisch gehaltert, die zugleich auch zur Stromzuführung dient.

Figur 2 zeigt einen Horizontalschnitt der Vorrichtung gemäß Figur 1 in deren Mittelebene, gesehen nach unten. Wie aus Figur 2 ersichtlich ist, ist die in der Zeichnung nach oben weisende Rückseite der Vorrichtung mit einer großräumigen Vertiefung 27 versehen, an der Entlüftungsschlitze 28 für die Wärmeabfuhr der geräteintern erzeugten Wärme ausgebildet sind. Das gegenüberliegende Bildfenster ist, wie gezeigt, mit einer volltransparenten Platte 6 aus Glas oder vorzugsweise Kunststoff bzw. "Lecxan Policarbonato" abgedeckt. Parallel zum Bildfenster 6 liegt mit kleinem Abstand eine weitere Platte 29, die so groß bemessen ist, daß sie das gesamte Bildfenster überdeckt. Die Platte 29 besteht aus semitransparentem, hellem, vorzugsweise milchig-weißem Material (Lecxan Opaline) und wirkt somit als Diffusorplatte, die die Lichtverteilung des von der auf ihrer Rückseite angeordneten Leuchtröhre 25 ausgesandten Lichts erheblich vergleichmäßigt. Die Platte 29 wirkt somit für das zwischen ihr und dem Bildfenster 6 angeordnete Bild wie eine verhältnismäßig gleichmäßige Hintergrundbeleuchtung, so daß dieses über die gesamte Fläche mit gutem Kontrast und hoher Farbintensität wahrnehmbar ist. Zugleich bringt die Platte 29 auch erhöhten Schutz gegenüber von außen einwirkenden Kräften, so daß die Beschädigungsgefahr der internen Komponenten verringert ist. An ihren Seitenrändern ist die Platte 29, wie gezeigt, umgebogen und wird durch in Vertikalrichtung parallel zu den Walzen 3, 4 verlaufende Halterungen oder Anlageflächen 30 abgestützt. Die Halterungen 30 sind ihrerseits in der Boden- und Deckplatte 16, 17 gehalten, so daß die Platte 29 lagestabil angeordnet ist und der zwischen ihr und dem Bildfenster 6 gebildete Spalt im wesentlichen konstante Weite besitzt. Durch diesen Spalt wird der folienartige Träger 5 mitsamt den Bildern schrittweise hindurchtransportiert. Durch diese Führung im Spalt werden zugleich auch evtl. Verwerfungen der Bildträgerfolie oder der Bilder unterdrückt, so daß das Bild plan und folglich gut wahrnehmbar gehalten ist.

Wie aus dem Vertikalschnitt gemäß Figur 3 ersichtlich ist, ist das Gehäuse 2 um eine unterseitige, parallel zur Längsrichtung der Bildrepräsentationsvorrichtung verlaufende und im wesentlichen in der unteren Gehäusemitte angeordnete Scharnierachse 31 aufklappbar, so daß die inneren Komponenten, wie etwa die Leuchtstofflampe (Leuchtröhre) 25 oder Komponenten der Steuerschaltung für Wartungs-, Reparatur- oder Einstellarbeiten zugänglich sind. Zu diesen Komponenten im Gehäuseinneren zählt auch ein manuell einstellbarer Zähler, der die Anzahl von im Bildfenster 6 aufeinanderfolgend gezeigten Bilder zählt, ausgehend vom ersten Bild des langgestreckten folienartigen Trägers 5. Wenn die Anzahl gezeigter Bilder die voreingestellte Anzahl erreicht, erzeugt der voreinstellbare Zähler ein Signal, das zur Umsteuerung der Drehrichtung des Antriebsmotors 19 führt, so daß dieser nach Ablauf der durch einen vorzugsweise gleichfalls einstellbaren Zeitgeber vorgegebenen Bildrepräsentationsdauer, den Träger 5 in Gegenrichtung transportiert und somit aufeinanderfolgend die bereits gezeigten Bilder erneut gezeigt werden. Hierdurch wird erreicht, daß der folienartige Träger nicht stets bis zu seinem Ende transportiert werden muß, bevor die Motor-Umsteuerung stattfindet. Durch den voreinstellbaren Zähler können somit bei richtiger Einstellung evtl. vorhandene leere Bildfelder im hinteren Bereich des Trägers 5 unterdrückt werden, so daß lediglich mit Bildern belegte Bildfelder dargeboten werden.

In Figur 4 ist der Träger 5, teilweise unterbrochen, dargestellt. Der Träger 5 weist eine Vielzahl von Bildfeldern 32 auf, deren Anzahl z. B. 15 bis 20 betragen kann. Jedes Bildfeld 32 ist etwas größer als das Bildfenster 6 und trägt jeweils ein zu präsentierendes Bild (ggf. auch mehrere Bilder). Die Bilder können direkt auf den Träger 5 aufgedruckt sein. Vorzugsweise besteht der Träger 5 aber aus zwei durchsichtigen, entlang der Bildfeldgrenzen miteinander verbundenen Folien, die an ihrer nach oben weisenden Kante aber unverbunden sind und somit Taschen bilden, in die die gewünschten zu präsentierenden Bilder eingeschoben werden können. Die Bildfelder 32 reichen nicht bis an den unteren Rand des Trägers 5, sondern enden in ihrem unteren Rand mit Abstand zum unteren Trägerrand, so daß ein im wesentlichen den gesamten Träger 5 an der unteren Kante überziehender Randstreifen 33 gebildet ist.

Auf dem Randstreifen 33 ist für jedes Bildfeld 32 eine mittige optische Markierung 34 in Form eines schwarzen Punktes angebracht.

Das linke äußere Bildfeld 32 ist mit einer zusätzlichen Markierung 35 versehen, die aus einem langgestreckten schwarzen Balken besteht. Zwischen den Markierungen 34 und 35 ist ein Abstand gebildet, die Markierungen 34 und 35 können aber auch nahtlos ineinander übergehen. Das rechte äußere Bildfeld 32 ist gleichfalls mit einer zusätzlichen Markierung 36 in Form eines langgestreckten schwarzen Balkens versehen, der sich rechts von der Markierung 34 des letzten Bildfelds erstreckt. Zwischen den benachbarten Markierungen 34 und 36 ist gleichfalls ein Abstand gebildet. Es ist aber auch möglich, die Markierungen direkt miteinander zu verbinden.

Die Markierungen 34 dienen jeweils zur Detektion der korrekten Positionierung eines Bildfelds 32 im Bildfenster 6, während die Markierungen 35 und 36 noch zusätzlich zur Detektion des äußersten linken bzw. äußersten rechten Bildfelds 32 dienen.

Die optischen Markierungen 34, 35 werden durch drei im Gehäuse 2 der Vorrichtung fest angeordnete Detektoren in Form von fotoelektrischen Lichtschranken 37, 38, 39 erfaßt. Die Lichtschranken 37, 38, 39 sind so angeordnet, daß die Markierungen bei Transport des Trägers 5 zwischen ihnen hindurchlaufen. Die Lichtschranke 38 ist weiterhin so montiert, daß die Markierung 34 sich direkt in ihr befindet, wenn das zugehörige Bildfeld 32 mittig im Bildfenster 6 angeordnet ist. Die Lichtschranke 38 gibt somit jeweils dann ein Signal, wenn sie bei Trägertransport die nachfolgende Markierung 34 erfaßt. Dieses Detektionssignal wird der Motor-Steuerschaltung zugeführt, die daraufhin sofort einen Stoppbefehl an den Antriebsmotor 19 abgibt. Hierdurch wird das nachfolgend zu präsentierende Bild exakt in der Bildfenstermitte angehalten.

Der Abstand zwischen den Lichtschranken 37 und 38 bzw. 38 und 39 ist gleich groß oder geringfügig größer als der Abstand zwischen den Markierungen 34 und 35 bzw. 34 und 36. Wenn die Lichtschranke 38 somit beim Vor- oder Rücklauf der Trägerfolie 5 das letzte Bildfeld (mit der Markierung 36) oder das erste Bildfeld (mit der Markierung 35) erfaßt, spricht zugleich auch die Lichtschranke 39 bzw. 37 an. Diese gleichzeitige Aktivierung der Lichtschranken 38 und 39 bzw. 38 und 37 wird als "letztes Bildfeld" bzw. "erstes Bildfeld" ausgewertet. Bei Auftreten solcher Signale wird die Motor-Drehrichtung umgekehrt, so daß nach Ablauf des Bildpräsentationsintervalls der Träger 5 nachfolgend intermittierend in Gegenrichtung gefördert wird. Somit wird die Transportrichtung automatisch umgeschaltet.

Am linken und rechten Rand des Trägers 5 sind Leerbereiche 40 vorgesehen, die zum Befestigen des Trägers 5 an den Walzen 3, 4 dienen.

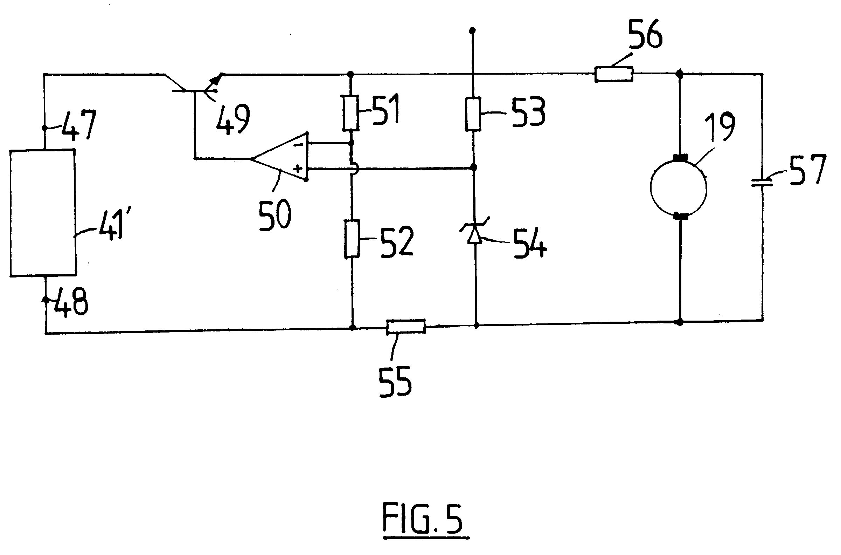

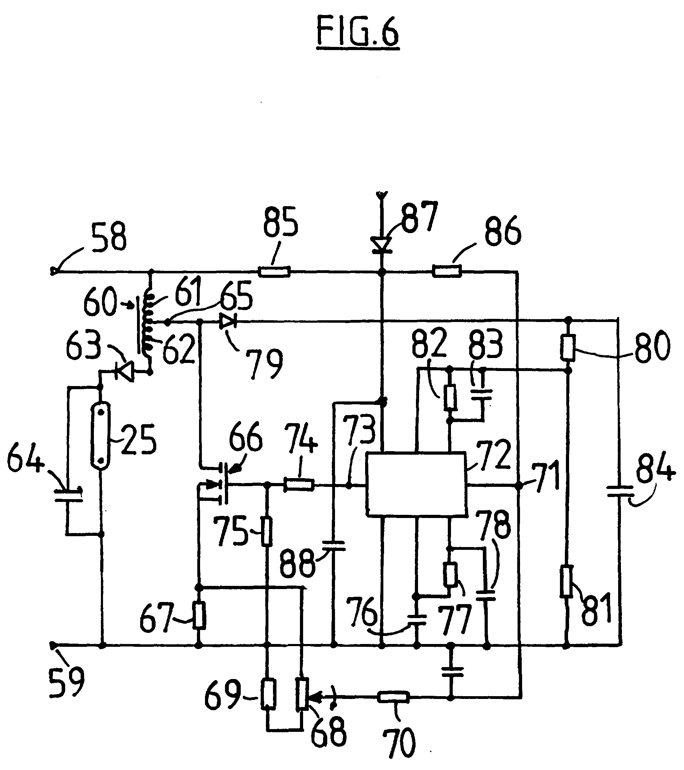

Die Ausgangssignale der Lichtschranken 37, 38, 39, die durch Leuchtdioden und diesen gegenüberliegenden Fototransistoren gebildet sind, werden einer Steuerschaltung 41 zugeführt, die auch die Stromspeisung der Lichtschranken-Leuchtdioden bewirkt. Die Steuerschaltung 41 steuert den Antriebsmotor 19 sowie die Leuchtröhr 25. Die für diese Steuerfunktionen vorgesehenen internen Komponenten der Steuerschaltung 41 sind in den Figuren 5 und 6 näher gezeigt.

Die Stromversorgung der Bildpräsentationsvorrichtung und der Steuerschaltung 41 erfolgt über Anschlüsse 42, 43, die mit einer externen Spannungsquelle, beispielsweise der Kraftfahrzeugbattere des Omnibusses, verbunden sind. Über diese Spannungsanschlüsse 42, 43 wird normalerweise eine Gleichspannung in der Größenordnung von ca. 24 V zugeführt. Alternativ kann auch eine Speisewechselspannung angelegt werden, wobei die Steuerschaltung 41 mit einem eingangsseitigen Gleichrichter ausgestattet ist.

Zwischen die Anschlüsse 42, 43 ist eine Hilfsspannungsquelle in Form eines wiederaufladbaren Akkumulators 44, z. B. in Form einer NiCd-Batterie geschaltet. Durch diese Spannungsquelle 44 kann die Stromversorgung der Steuerschaltung 41 und der von dieser gesteuerten Komponenten kurzfristig auch noch nach Abschaltung oder vorübergehendem Ausfall der externen Spannungsquelle aufrechterhalten werden. Bei angeschlossener externer Spannungsquelle wird die Hilfsspannungsquelle 44 jeweils aufgeladen, so daß sie mit voller Ladekapazität bei Abschaltung der externen Spannungsquelle zur Verfügung steht.

Mit der Steuerschaltung 41 sind weiterhin manuell betätigbare Schalter 45, 46 verbunden, die im Inneren des Gehäuses 2 der Bildrepräsentationsvorrichtung 1 angeordnet sind. Bei geöffnetem Gehäuse 2 wird über den Schalter 45 bei dessen Betätigung ein Bildtransportvorgang um ein Bildfeld 32 nach links ausgeführt, während eine Betätigung des Schalters 46 zu einem Bildtransportvorgang um ein Bild nach rechts führt. Die Stillsetzung des neuen Bildfelds in der korrekten Position wird über die hierbei aktiv gehaltene Lichtschranke 38 automatisch gesteuert, so daß der Benutzer über die Schalter 45, 46 jeweils nur einen kurzen Betätigungsimpuls eingeben, d.h. sie nur jeweils kurzfristig betätigen muß.

In Figur 5 ist die Steuerung des Antriebsmotors 19 in größeren Einzelheiten gezeigt. Die im Detail dargestellten Komponenten sind in der Steuerschaltung 41 gemäß Figur 4 enthalten, deren übrige Komponenten durch den Baustein 41' repräsentiert sind. Die Motorsteuerung bewirkt eine Anhebung der an den Motor 19 angelegten Spannung bei Erhöhung des Motorstroms, so daß der interne Motorwiderstand kompensiert wird und eine Drehzahlkompensation erreicht wird. Selbst bei Laständerungen und Drehmomentschwankungen bleibt die Motordrehzahl somit im wesentlichen konstant und es wird ein harmonischer Bildlauf erreicht. Der Antriebsmotor 19 kann aufgrund dieser Schaltung verhältnismäßig klein und leichtgewichtig gewählt werden und bewirkt dennoch einen zuverlässigen, gleichmäßigen Bildtransport auch bei Änderungen der aufzubringenden Transportkräfte. Um dies zu erreichen, erzeugt die Steuerschaltung 41' an Ausgängen 47, 48 eine Spannung, die höher liegt als die dem Antriebsmotor 19 zugeführte Spannung und beispielsweise 22 V beträgt.

Zwischen den Anschluß 47 und den Antriebsmotor 19 ist ein steuerbarer Widerstand 49 in Form eines basisgesteuerten Transistors geschaltet, dessen Kollektor-Emitter-Strecke in Reihe zwischen dem Anschluß 47 und dem Antriebsmotor 19 liegt. Die Basis des Transistors 49 wird durch einen Verstärker 50 gesteuert, dessen "-"-Eingang mit dem Abgriff eines zwischen den Emitter des Transistors 49 und den Anschluß 48 geschalteten Widerstands-Spannungsteilers 51, 52 verbunden ist. Der "+"-Eingang des Verstärkers 50 ist mit dem Verbindungspunkt zwischen einem Widerstand 53 und einer Zener-Diode 54 (mit konstantem Spannungsabfall) geschaltet. Am anderen Anschluß des Widerstands 53 liegt eine konstante Vorspannung in Höhe von z. B. 12,5 V an. Der andere Anschluß der Zener-Diode 54 ist mit einem Motoranschluß und einem in Reihe zwischen den Motor 19 und den Anschluß 48 geschalteten Widerstand 55 verbunden, über den der Motorstrom fließt. Mit dem Bezugszeichen 56 ist der interne Motorwiderstand des Antriebsmotors 19 repräsentiert. Parallel zum Antriebsmotor 19 liegt in üblicher Weise ein Kondensator 57. Bei zunehmendem Motorstrom wird der Spannungsabfall am Widerstand 55 höher, so daß auch das Potential am "+"-Eingang des Verstärkers 50 ansteigt. Um den Verstärker 50 wieder ins Gleichgewicht zu bringen, steuert dieser den Transistor 49 stärker durch, so daß das Potential am Emitter des Transistors 49 wächst. Hierdurch verschiebt sich das Potential am Abgriff des Widerstands-Spannungsteilers 51, 52 nach oben, bis der Spannungsunterschied zwischen den beiden Verstärkereingängen im wesentlichen aufgehoben ist. Durch diese Steuerung erhöht sich folglich bei zunehmendem Motorstrom die Motorspannung, und umgekehrt.

In Figur 6 ist ein Ausführungsbeispiel der erfindungsgemäßen Lampensteuerschaltung gezeigt, die bei der erfindungsgemäßen Bildrepräsentationsvorrichtung einsetzbar ist, aber auch für andere Zwecke, nämlich allgemein zur Steuerung einer Leuchtröhre (Gasentladungslampe) geeignet ist. Zwischen zwei Spannungsversorgungsanschlüsse 58, 59, zwischen denen eine Gleichspannung von z. B. 22 V geschaltet ist, ist eine Reihenschaltung aus einem Transformator 60 mit gegenseitig in gleicher Richtung (in Serie) verbundener Primär- und Sekundärwicklung 61, 62, einer in Durchlaßrichtung geschalteten Diode 63 und der Leuchtröhre 25 geschaltet. Parallel zur Leuchtröhre 25 liegt ein hochspannungstauglicher Kondensator 64, der eine Nennspannung von 1 kV besitzt. Ein Anschluß 65 zwischen der Primär- und Sekundärwicklung 61, 62 ist mit einem Sperrglied 66 in Form eines elektronischen Schalters, insbesondere eines Feldeffekttransistors verbunden, dessen Source-Anschluß über einen Strommeßwiderstand 67 mit dem Anschluß 59 gekoppelt ist. Der Widerstand 67 besitzt geringen Widerstandswert, beispielsweise 1Ω. Parallel zum Widerstand 67 liegt ein Widerstands-Spannungsteiler 68, 69. Der Widerstand 68 ist als Potentiometer ausgebildet, an dessen Abgriff eine für den über den Widerstand 67 fließenden Lampenstrom repräsentative Spannung abgegriffen und über einen Widerstand 70 an einen Anschluß 71 einer Vergleicher- und Treiberschaltung 72 angelegt wird.

Die Schaltung 72 weist einen internen Vergleicher auf, der den über den Widerstand 67 fließenden Lampenstrom bzw. die zugehörige Spannung am Anschluß 71 mit einer internen Referenzspannung vergleicht und - bei Überschreiten der Referenzspannung - an einem Ausgangsanschluß 73 ein Sperrsignal erzeugt, das an den Feldeffekttransistor 66 über Widerstände 74, 75 angelegt wird und den Feldeffekttransistor 66 sperrt. Vorzugsweise ist in der Schaltung 72 ein Flipflop enthalten, das bei Ansprechen des internen Vergleichers gesetzt wird und dessen dann erzeugtes Ausgangssignal das Sperrsignal am Anschluß 73 bildet. Das Flipflop wird periodisch mit hoher Frequenz von ca. 40 bis 60 kHz, vorzugsweise 50 kHz rückgesetzt. Im rückgesetzten Zustand erzeugt das Flipflop am Ausgangsanschluß 73 ein Freigabesignal, durch das der Feldeffekttransistor 66 wieder in den Schließzustand gebracht wird. Somit kann der Lampenstrom (über die Sekundärwicklung 62) erneut fließen und wächst so lange an, bis die Spannung am Anschluß 73 die interne Referenzspannung erreicht und das Flipflop gesetzt, d.h. der Transistor 66 gesperrt wird. Die Leuchtröhre 25 wird somit mit einer Frequenz angesteuert, die der Rücksetzfrequenz des Flipflops in der Schaltung 72 entspricht. Bei ansteigender Spannung an den Anschlüssen 58, 59 wächst der Lampenstrom schneller an, so daß der Strom-Schwellwert schneller erreicht wird und der Feldeffekttransistor 66 somit bereits nach kürzerer Zeit wieder ausgeschaltet wird. Durch diese internen Rückkopplungen entsteht eine Unabhängigkeit der von der Leuchtröhre 25 aufgenommenen Leistung von der Eingangsspannung, so daß die Lampenleistung selbst bei variierender Eingangsspannung konstant bleibt.

Der parallel zur Leuchtröhre 25 liegende Kondensator 64 dient zum Starten der Leuchtröhre. Bei Einschalten der Spannungsversorgung der Leuchtröhre liegt an dieser über die Sekundärwicklung 62 und die hochspannungstaugliche Diode 63 eine Spannung von 600 V an, die im gesamten Leuchtröhreninneren eine Ionisierung des in dieser enthaltenen Gases, insbesondere Neon, bewirkt. Gleichzeitig wird der Kondensator 64 aufgeladen. Durch die fortschreitende Ionisierung des Gases in der Leuchtröhre 25 nimmt deren inneren Widerstand drastisch ab, so daß sich der Kondensator 64 in einem starken Stromimpuls über diese entladen kann. Dieser Stromimpuls führt zu einer Verdampfung des Quecksilbers auf den Elektrodenanschlüssen der Lampe, so daß die Leuchtröhre 25 zündet und stabil zu brennen beginnt. Der Einschaltvorgang dauert nur ungefähr 50 ms.

Die Rücksetzfrequenz des Flipflops in der Schaltung 72 wird durch einen Kondensator 76 und einen Widerstand 77 bestimmt, die miteinander und mit der Schaltung 72 verbunden sind. Parallel zur Reihenschaltung der Elemente 76, 77 liegt ein Kondensator 78, der als Bypass für die Schaltfrequenz dient.

Um Überspannungen am Drain des Feldeffekttransistors 66 zu vermeiden, wird die daran anliegende Spannung über eine Diode 79 an einen mit dem Anschluß 59 verbundenen Widerstands-Spannungsteiler 80, 81 angelegt, dessen Teiler-Abgriff sowohl direkt als auch über einen Widerstand 82 und einen parallel hierzu geschalteten Kondensator 83 mit der Schaltung 72 verbunden ist. Wenn die Spannung am Anschluß 65 und damit am Drain des Feldeffekttransistors 66 einen vorgegebenen Wert von beispielsweise 78 V überschreitet, wird der in der Schaltung 72 gebildete Spannungs-Referenzwert (für den Vergleich mit dem Meßstrom) automatisch reduziert, so daß die Durchschaltzeiten des Feldeffekttransistors 66 automatisch reduziert werden. Hierdurch wird ein Überlastschutz für den Feldeffekttransistor 66 erreicht.

Parallel zum Widerstands-Spannungsteiler 80, 81 liegt ein Kondensator 84.

Die Anschlüsse 58 und 71 sind über eine Reihenschaltung aus zwei Widerständen 85, 86 miteinander verbunden. Der Verbindungspunkt zwischen den Widerständen 85, 86 ist mit der Kathode einer Diode 87 gekoppelt, an deren Anode eine Referenzspannung von z. B. 12,5 V anliegt. Diese Referenzspannung wird auch direkt der Schaltung 72 zugeführt und ist über einen Kondensator 88, der zwischen den Verbindungspunkten zwischen den Widerständen 85, 86 und der Diode 87 sowie den Anschluß 59 geschaltet ist, gepuffert.

Die beschriebene Lampensteuerschaltung läßt sich nicht nur für gebogene, sondern auch für stabförmige Gasentladungslampen für Niederdruck- oder auch Hochdruck-Füllung einsetzen.

## Patentansprüche

1. Vorrichtung zum Präsentieren von rückseitig beleuchtbaren Bildern, insbesondere Werbebildern, die von einem folienartigen Träger (5) getragen sind, mit einem Gehäuse (2), das an seiner Vorderseite ein Bildfenster (6) besitzt, an dem die Bilder aufeinanderfolgend intermittierend vorbeitransportierbar sind, einer im Gehäuse (2) angeordneten Beleuchtungseinrichtung (25) zum rückwärtigen Beleuchten des Bildfensters (6), und zwei parallel zu den vertikalen Seitenrändern des Bildfensters (6) angeordneten und durch einen Antriebsmotor (19) drehbaren Walzen (3, 4) zum Auf- und Abwickeln des folienartigen Trägers (5) mitsamt den Bildern, dadurch gekennzeichnet, daß der Antriebsmotor (19) mit einer Rückkopplungsschaltung (Figur 5) versehen ist, die die an den Antriebsmotor (19) angelegte Spannung bei ansteigendem Motorstrom anhebt.

2. Vorrichtung nach Anspruch 1, dadurch gekennzeichnet, daß der Antriebsmotor (19) über einen Riemen (22), insbesondere einen Zahnriemen, mit den Walzen (3, 4) gekoppelt ist.

3. Vorrichtung nach Anspruch 1 oder 2, dadurch gekennzeichnet, daß eine der Walzen (39 direkt mit dem Antriebsmotor (19) gekoppelt ist und die andere Walze (4) mit einer Federkupplung (18) versehen ist, die die andere Walze (4) mit im wesentlichen konstanter Vorspannung beaufschlagt.

4. Vorrichtung nach Anspruch 3, dadurch gekennzeichnet, daß die Federkupplung (18) eine im Inneren der Walze (4) angeordnete Spiralfeder konstanter Federkraft mit einer Vielzahl von Windungen umfaßt.

5. Vorrichtung nach einem oder mehreren der vorhergehenden Ansprüche, gekennzeichnet durch eine Geschwindigkeits-Regelschaltung (Figur 5) zum Regeln der Geschwindigkeit des Antriebsmotors auf im wesentlichen konstante Drehzahl.

6. Vorrichtung nach einem oder mehreren der vorhergehenden Ansprüche, dadurch gekennzeichnet, daß an einem Bild- oder Trägerrand Markierungen (34, 35, 36), vorzugsweise optisch abtastbare Markierungen, angebracht sind, die durch eine Detektoranordnung (37, 38, 39) berührungsfrei abtastbar sind.

7. Vorrichtung nach Anspruch 6, dadurch gekennzeichnet, daß die Detektoranordnung (37, 38, 39) fotoelektrisch arbeitet.

8. Vorrichtung nach Anspruch 6 oder 7, dadurch gekennzeichnet, daß je Bild eine Markierung (34) angebracht ist und die Detektoranordnung (37, 38, 39) bei Erfassung der Markierung (34) ein das sofortige Anhalten des Antriebsmotors (19) bewirkendes Signal erzeugt.

9. Vorrichtung nach einem der Ansprüche 6 bis 8, dadurch gekennzeichnet, daß die Detektoranordnung (37, 38, 39) drei Lichtschranken aufweist und auf den randseitigen Bildfeldern des folienartigen Trägers (5) zusätzliche, gegeneinander bezüglich der Bildmarkierung (34) versetzte optische Randmarkierungen (35, 36) vorhanden sind, bei deren Erfassung die Detektoranordnung (37, 38, 39) ein Stopp- oder Drehrichtungsumkehrsignal für den Antriebsmotor (19) erzeugt.

10. Vorrichtung nach einem oder mehreren der vorhergehenden Ansprüche, gekennzeichnet durch einen voreinstellbaren Zähler, der die Anzahl von transportierten Bildern zählt und bei Erreichen des voreingestellten Zählstands ein Signal zur Umkehr der Drehrichtung des Antriebsmotors (19) erzeugt.

11. Vorrichtung nach Anspruch 10, dadurch gekennzeichnet, daß der Zähler bei Erfassung des ersten Bilds auf dem Träger (5) zurückgesetzt wird.

12. Vorrichtung nach einem oder mehreren der vorhergehenden Ansprüche, gekennzeichnet durch eine interne Spannungsquelle (44) zur zumindest kurzzeitigen Aufrechterhaltung der Spannungsversorgung der Gerätekomponenten auch bei Ausfall oder Abschaltung der externen Spannungsversorgung.

13. Vorrichtung nach Anspruch 12, dadurch gekennzeichnet, daß die interne Spannungsquelle als durch die externe Spannungsversorgung wiederaufladbarer Akkumulator (44) ausgebildet ist.

14. Vorrichtung nach einem oder mehreren der vorhergehenden Ansprüche, dadurch gekennzeichnet, daß am oder im Gehäuse (2) manuell betätigbare Schalter (45, 46) samt zugehöriger Steuerschaltung (41) für das Befehlen von Rechts- oder Linkslauf vorgesehen sind.

15. Vorrichtung nach einem oder mehreren der vorhergehenden Ansprüche, dadurch gekennzeichnet, daß auf beiden Seiten des folienartigen Trägers (5) im Bereich des Bildfensters (6) lichtdurchlässige Platten (6, 29) angeordnet sind.

16. Vorrichtung nach Anspruch 15, dadurch gekennzeichnet, daß die Platte (29) zwischen dem folienartigen Träger (5) und der Beleuchtungseinrichtung (25) aus semitransparentem, hellem, vorzugsweise weißlichem Material, Lecxan Policarbonato, besteht.

17. Vorrichtung nach einem oder mehreren der vorhergehenden Ansprüche, gekennzeichnet durch einen Spannungsgenerator zum zumindest anfänglichen Anlegen einer oberhalb 250 V liegenden Spannung an die als Leuchtröhre ausgebildete Beleuchtungseinrichtung (25) für die Ionisation des in der Leuchtröhre (25) enthaltenen Gases.

18. Vorrichtung nach Anspruch 17, dadurch gekennzeichnet, daß die an die Leuchtröhre (25) zumindest anfänglich angelegte Spannung eine Amplitude von 300 bis 900 V, vorzugsweise ca. 600 V besitzt.

19. Vorrichtung nach Anspruch 17 oder 18, dadurch gekennzeichnet, daß die an die Leuchtröhre (25) angelegte Spannung eine Frequenz von ca. 10 bis 100 kHz, vorzugsweise ca. 50 kHz, besitzt.

20. Vorrichtung nach einem der Ansprüche 17 bis 19, dadurch gekennzeichnet, daß parallel zur Leuchtröhre (25) ein Kondensator (64) geschaltet ist.

21. Vorrichtung nach einem der Ansprüche 17 bis 20, dadurch gekennzeichnet, daß der Spannungsgenerator einen Konverter (60, 63, 64) aufweist, der eine Niedergleichspannung in die oberhalb 250 V liegende Spannung transformiert.

22. Vorrichtung nach Anspruch 21, dadurch gekennzeichnet, daß der Konverter einen Transformator (60) umfaßt, mit dessen Sekundärwicklung (62) die Leuchtröhre (25) unter Zwischenschaltung einer Diode (63) verbunden ist.

23. Vorrichtung nach einem oder mehreren der vorhergehenden Ansprüche, dadurch gekennzeichnet, daß der Beleuchtungseinrichtungs-Strom gemessen und bei Erreichen eines vorgegebenen Schwellwerts über ein Sperrglied (66) abgeschaltet wird .

24. Vorrichtung nach Anspruch 23, dadurch gekennzeichnet, daß das Sperrglied (66) periodisch wieder durchgeschaltet wird.

25. Vorrichtung nach Anspruch 23 oder 24, dadurch gekennzeichnet, daß das Sperrglied (66) als elektronischer Schalter, insbesondere als Feldeffekttransistor, ausgebildet ist.

26. Vorrichtung nach einem der Ansprüche 23 bis 25, dadurch gekennzeichnet, daß die am Sperrglied (66) anliegende mittlere Spannung überwacht und der vorgegebene Schwellwert bei ansteigender mittlerer Spannung verringert wird.

## Claims

1. Device for displaying pictures illuminated from behind, particularly pictures for advertising purposes which are carried by a sheet-type carrier (5), said device comprising a housing (2) having at its front side a picture window (6) past which said pictures may be transported in intermittent succession, illuminating means (25) for illuminating said picture window (6) from behind, and two rollers (3, 4) arranged in parallel with the vertical borders of said picture window (6) and rotated by a drive motor (19) for reeling and unreeling said sheet-type carrier (5) together with said pictures, characterised in that said drive motor (19) is provided with a feedback circuit (Fig. 5) for raising the voltage applied to said drive motor (19) in the event of a rise in motor current.

2. Device according to claim 1, characterised in that said drive motor (19) is coupled to said rollers (3, 4) through a belt (22), particularly a toothed belt.

3. Device according to claim 1 or 2, characterised in that one of said rollers (3) is directly coupled to said drive motor (19) and said other roller (4) is provided with a spring coupling (18) applying a substantially constant bias to said other roller (4).

4. Device according to claim 3, characterised in that said spring coupling (18) comprises a spiral spring arranged inside said roller (4) and having a multiplicity of convolutions.

5. Device according to one or several ones of the preceding claims, characterised by a velocity control circuit (Fig. 5) for controlling the velocity of said drive motor to a substantially constant velocity.

6. Device according to one or several ones of the preceding claims, characterised in that markings (34, 35, 36), preferably markings for optical scanning are applied on a border of said pictures or of said carrier, which may be scanned by a detector assembly (37, 38, 39) free of contact.

7. Device according to claim 6, characterised in that said detector assembly (37, 38, 39) works along photoelectrical principles.

8. Device according to claim 6 or 7, characterised in that one marking (34) is applied per picture, and that said detector assembly (37, 38, 39) generates a signal causing immediate stoppage of said drive motor (19) upon detecting said marking (34).

9. Device according to one of claims 6 to 8, characterised in that said detector assembly (37, 38, 39) comprises three photoelectric barriers and that additional optical border markings (35, 36) are provided in mutually staggered arrangement with respect to said picture marking (34) on the border-side picture fields of said sheet-type carrier (5), with said detector assembly (37, 38, 39) generating a stop or reversing signal for said drive motor (19) upon detecting said border markings (35, 36).

10. Device according to one or several ones of the preceding claims, characterised by a pre-settable counter for counting the number of transported pictures and generating a signal for reversing the rotating direction of said drive motor (19) upon reaching the pre-set count.

11. Device according to claim 10, characterised in that said counter is reset upon detecting the first picture on said carrier (5).

12. Device according to one or several ones of the preceding claims, characterised by an internal power source (44) for maintaining power supply to said apparatus components at least temporarily, even in the event of failure or inactivation of the external power supply.

13. Device according to claim 12, characterised in that said internal power source is in the form of an accumulator (44) which is re-chargeable through the external power supply.

14. Device according to one or several ones of the preceding claims, characterised in that on or inside said housing (2) manual switches (45, 46) together with associated control circuitry (41) for initiating operation in the right-hand or left-hand direction are provided.

15. Device according to one or several ones of the preceding claims, characterised in that translucent panels (6, 29) are arranged in the area of said picture window (6) on both sides of said sheet-type carrier (5).

16. Device according to claim 15, characterised in that said panel (29) arranged between said sheet-type carrier (5) and said illuminating means (25) is made up of semi-transparent, preferably whitish material by Lecxan Policarbonato.

17. Device according to one or several ones of the preceding claims, characterised by a power generator for at least initially applying a voltage in excess of 250 V to said illuminating means (25) having the form of a tubular lamp, for ionising the gas contained inside said tubular lamp (25).

18. Device according to claim 17, characterised in that said voltage at least initially applied to said tubular lamp (25) has an amplitude in the range of 300 to 900 V, preferably approx. 600 V.

19. Device according to claim 17 or 18, characterised in that said voltage applied to said tubular lamp (25) has a frequency of approx. 10 to 100 kHz, preferably approx. 50 kHz.

20. Device according to one of claims 17 to 19, characterised in that a capacitor (64) is connected in parallel with said tubular lamp (25).

21. Device according to one of claims 17 to 20, characterised in that said power generator comprises a converter (60, 63, 64) for converting a low DC voltage into said voltage in excess of 250 V.

22. Device according to claim 21, characterised in that said converter comprises a transformer (60) to the secondary winding (62) of which said tubular lamp (25) is connected via a diode (63).

23. Device according to one or several ones of the preceding claims, characterised in that the current of said illuminating means is measured and cut off through an interruptor (66) upon reaching a predetermined threshold value.

24. Device according to claim 23, characterised in that said interruptor (66) is periodically returned to the conductive state.

25. Device according to claim 23 or 24, characterised in that said interruptor (66) has the form of an electronic switching element, particularly a field effect transistor.

26. Device according to one of claims 23 to 25, characterised in that the voltage applied to said interruptor (66) is monitored and said predetermined threshold value is reduced in the event of a rising mean voltage.

## Revendications

1. Dispositif pour l'affichage d'images illuminées par l'arrière, en particulier images publicitaires qui sont portées par un support (5) à la manière d'un film, comportant un boîtier (2) qui présente sur son côté avant une fenêtre d'image (6), le long de laquelle les images peuvent être transportées par intermittence en succession, un dispositif d'illumination (25) disposé dans le boîtier (2) pour illuminer de l'arrière la fenêtre d'image (6), et deux rouleaux (3, 4) rotatifs disposés parallèlement par rapport aux bords latéraux verticaux de la fenêtre d'image (6) entraînés par un moteur d'entraînement (19) pour enrouler et dérouler le support (5) à la manière d'un film y compris les images, caractérisé en ce que le moteur d'entraînement (19) est pourvu d'un circuit de réglage (figure 5) qui augmente la tension du moteur d'entraînement (19) lorsque le courant moteur augmente.

2. Dispositif selon la revendication 1, caractérisé en ce que le moteur d'entraînement (19) est raccordé moyennant une courroie (22) en particulier une courroie crantée avec les rouleaux (3, 4).

3. Dispositif selon les revendications 1 ou 2, caractérisé en ce qu'un des rouleaux (3) est raccordé directement au moteur d'entraînement (19) et que l'autre rouleau (4) est pourvu d'un accouplement à ressort qui exerce sur l'autre rouleau (3) une précontrainte substantiellement constante.

4. Dispositif selon la revendication 3, caractérisé en ce que l'accouplement à ressort (18) comporte à l'intérieur du rouleau (4) un ressort en spirale présentant une force de ressort constante et une pluralité de spires.

5. Dispositif selon l'une ou plusieurs des revendications précédentes, caractérisé par un circuit de réglage de la vitesse (figure 5) pour régler la vitesse du moteur d'entraînement à un régime substantiellement constant.

6. Dispositif selon l'une ou plusieurs des revendications précédentes, caractérisé en ce que des marquages (34, 35, 36), de préférence des marquages qui peuvent être captés optiquement se trouvent sur un bord d'image ou de support, qui peuvent être captés sans être touchés par un dispositif détecteur (37, 38, 39).

7. Dispositif selon la revendication 6, caractérisé en ce que le dispositif détecteur (37, 38, 39) est à fonctionnement photoélectrique.

8. Dispositif selon les revendications 6 ou 7, caractérisé en ce qu'un marquage (34) est appliqué par image et que le dispositif détecteur (37, 38, 39) produit lorsqu'il saisit le marquage (34) un signal arrêtant immédiatement le moteur d'entraînement (19).

9. Dispositif selon l'une quelconque des revendications 6 à 8, caractérisé en ce que le dispositif détecteur (37, 38, 39) présente trois barrages photoélectriques et que sur les champs d'image côté bord du support (5) à la manière d'un film des marquages de bord (35, 36) optiques supplémentaires décalés par rapport au marquage d'image (34) sont prévus, qui lorsque le dispositif détecteur (37, 38, 39) les saisit celui-ci produit un signal d'arrêt ou de renversement de la direction de rotation pour le moteur d'entraînement (19).

10. Dispositif selon l'une ou plusieurs des revendications précédentes, caractérisé en ce qu'un compteur réglable à l'avance est prévu qui compte le nombre d'images à transporter et lorsque le compte préréglé est atteint il produit un signal de renversement du sens de rotation du moteur d'entraînement (19).

11. Dispositif selon la revendication 10, caractérisé en ce que le compteur est remis en arrière lorsque la première image sur le support (5) est saisi.

12. Dispositif selon l'une ou plusieurs des revendications précédentes, caractérisé par une source de tension interne (44) pour au moins le maintien passager de l'alimentation en tension des composants même en cas de panne ou de déclenchement de l'alimentation externe en tension.

13. Dispositif selon la revendication 12, caractérisé en ce que la source de tension interne est formée comme accumulateur (44) pouvant être rechargé par l'alimentation externe en tension.

14. Dispositif selon l'une ou plusieurs des revendications précédentes, caractérisé en ce que des interrupteurs pouvant être actionnés manuellement (45, 46) y compris leur circuit de commande associé (41) pour donner l'ordre de marche à droite ou de marche à gauche sont prévus sur ou dans le boîtier (2).

15. Dispositif selon l'une ou plusieurs des revendications précédentes, caractérisé en ce que des deux côtés du support (5) à la manière d'un film des plaques translumineuses (6, 29) sont prévues dans la zone de la fenêtre d'image (6).

16. Dispositif selon la revendication 15, caractérisé en ce que la plaque (29) entre le support (5) à la manière d'un film et le dispositif d'illumination (25) consiste en un matériau semi-transparent, clair, de préférence blanchâtre de Lecxan Policarbonato.

17. Dispositif selon l'une ou plusieurs des revendications précédentes, caractérisé par un générateur de tension pour l'application au moins initiale d'une tension au-dessus de 250 V au dispositif d'illumination (25) formé comme tube fluorescent pour l'ionisation du gaz contenu dans le tube fluorescent (25).

18. Dispositif selon la revendication 17, caractérisé en ce que la tension du moins initialement appliquée au tube fluorescent (25) possède une amplitude de 300 à 900 V de préférence environ 600 V.

19. Dispositif selon les revendications 17 ou 18, caractérisé en ce que la tension appliquée au tube fluorescent (25) possède une fréquence d'environ 10 à 100 kHz de préférence environ 50 kHz.

20. Dispositif selon l'une quelconque des revendications 17 à 19, caractérisé en ce qu'un condensateur (64) est placé parallèlement au tube fluorescent (25).

21. Dispositif selon l'une quelconque des revendications 17 à 20, caractérisé en ce que le générateur de tension présente un convertisseur (60, 63, 64) qui transforme une tension basse de courant continu en une tension se situant au-dessus de 250 V.

22. Dispositif selon la revendication 21, caractérisé en ce que le convertisseur comporte un transformateur (60) à la bobine secondaire (62) duquel le tube fluorescent (25) est raccordé par l'intermédiaire d'une diode (63).

23. Dispositif selon l'une ou plusieurs des revendications précédentes, caractérisé en ce que le courant du dispositif d'illumination est mesuré et lorsqu'il atteint une valeur de seuil prédéterminée il est coupé par un élément de blocage (66).

24. Dispositif selon la revendications 23, caractérisé en ce que l'élément de blocage (66) est périodiquement commuté.

25. Dispositif selon les revendications 23 ou 24, caractérisé en ce que l'élément de blocage (66) est formé comme interrupteur électronique, notamment comme transistor à effet de champ.

26. Dispositif selon l'une quelconque des revendications 23 à 25, caractérisé en ce que la tension moyenne sur l'élément de blocage (66) est surveillée et que la valeur de seuil prédéterminée est diminuée lorsque la tension moyenne augmente.
